# EUROPEAN PATENT SPECIFICATION

(11) **EP 0 958 238 B1**
(45) Date of publication and mention of the grant of the patent: **03.04.2002**
(21) Application number: 97949322.8
(22) Date of filing: 16.12.1997
(51) Int. Cl.: C01B 15/023

(54) **METHOD FOR THE PRODUCTION OF HYDROGEN PEROXIDE BY HYDRATING A QUINONE SOLUTION AND ARRANGEMENT FOR PERFORMING THE METHODS**
VERFAHREN ZUR HERSTELLUNG VON WASSERSTOFFPEROXID DURCH HYDRIERUNG EINER CHINONLÖSUNG UND VORRICHTUNG ZUR DURCHFÜHRUNG DES VERFAHRENS
PROCEDE DE PRODUCTION DE PEROXYDE D'HYDROGENE PAR HYDRATATION D'UNE SOLUTION CHINONIQUE ET DISPOSITIF UTILISE A CET EFFET

(30) Priority: 23.12.1996 SE 9604763
(43) Date of publication of application: 24.11.1999
(73) Proprietor: KVAERNER PROCESS SYSTEMS A.S., 1361 Billingstad (NO)
(72) Inventor: BENGTSSON, Erik, S-445 34 Bohus (SE); UNUM, Arnfinn, N-1410 Kolbotn (NO); CASEN, Aslak, N-1360 Nesbru (NO)
(86) International application number: SE9702100
(87) International publication number: WO9828225

(56) References cited:
- WO-A-95/04702
- WO-A-95/28350
- SE-B- 418 489
- SE-B- 459 919
- SE-C- 503 573

## Description

### TECHNICAL FIELD:

The present invention relates to a method for the production of hydrogen peroxide by hydrogenating a quinone compound with hydrogen gas using a catalyst in dispersion in a quinone solution called the working solution, whereupon this is oxidized and extracted with water to form a hydrogen peroxide water solution.

### PRIOR ART:

Many different processes for the production of hydrogen peroxide are already known, but the process that is by far the most used is that which is based on hydrogenating anthraquinone followed by oxidation and separation of the peroxide formed by the oxidation from the quinone solution by extraction with water whereby a peroxide water solution is obtained.

The hydrogenation of the anthraquinone solution is usually carried out in a hydrogenating reactor by means of hydrogen gas and a catalyst which can be present in a solid dispersed condition in the anthraquinone solution. Other types of catalysts may also be used. The catalyst which is used to a large extent is the metal palladium, which is applied in a very thin layer on inert vehicle granules, such as zeolite (AlSi). The amount of catalyst is usually in the order of 10-20 grams/litre working solution.

The working solution in which anthraquinone, which is a non-polar compound and usually consists of ethyl anthraquinone, comprises solvents such as trimethylbenzene having the trade name Shellsol plus polar solvents such as higher alcohols of the type ethylhexanol and diisobutylcarbinol.

It is usual that the hydrogen is allowed to flow into the bottom part of the reactor whereupon a certain stirring of the reaction mixture occurs when the hydrogen bubbles move upwards. To ensure that only a hydrogenating of the double bound oxygen atoms of the anthraquinone shall occur without the formation of too many by-products, the reaction is carried out at a temperature of about 40°C. The hydrogenated anthraquinone remains in solution. The pressure in the hydrogenating reactor is usually up to an overpressure of a few atmospheres.

The known processes are continuous and a part of the working solution is therefore taken out continuously from the hydrogenating reactor while new, non-hydrogenated working solution is added. The hydrogenated working solution is filtered after it has been taken out in one or more filters and is thereafter often degassed by means of nitrogen to expel remaining hydrogen gas.

Thereafter, the hydrogenated working solution is oxidized by means of oxygen or air usually in an oxidation tower. The oxidation usually occurs in a co-current, but it also occurs in some cases in counter-current.

After the oxidation the working solution is subjected to an extraction by means of water where a more or less pure peroxide-water solution is obtained. This is usually purified and concentrated in different ways. The working solution which comes out from the extraction treatment is regenerated wholly or partly with alkaline solutions or with aluminium oxide for removal of by-products and is returned to a storage tank for working solution wherefrom it finally is fed into the hydrogenating reactor.

### TECHNICAL PROBLEM:

The hydrogenating reaction in the known processes is usually too slow. This is due to the fact that it is necessary to work with such a low temperature as 40°C owing to the working solution which would give a high contamination of by-products at higher temperatures. At this low temperature and with unsufficient stirring, the reaction velocity will be limited and it is therefore necessary to use a high content of catalyst, for example 10-20. grams/litre. This causes in turn makes it impossible for stirring to be carried out since the catalyst grains will be ground against each other and bring about too fine particles, which will cause inconvenience later in the process. This inconvenience refers mainly to the filtering-out of the catalyst wherein fine particles easily clog the filter. The filters must be cleaned by so-called backflow at short intervals. Sometimes this is not sufficient and the filters must be dismantled and cleaned outside the process or replaced. This often means that the production is disturbed. To avoid the filter problems the catalyst is often arranged as a solid bed but then substantially more by-products are instead formed in the hydrogenating reactor. A great part of the catalyst mass, about 1/3, will always be present in the filter house where it is not useful but rather the opposite.

### THE SOLUTION:

It has therefore long been a desire to improve the known processes and according to the present invention a method has been brought about for the production of hydrogen peroxide (H₂O₂) by hydrogenating a quinone solution (working solution) with hydrogen gas using a catalyst in dispersion in the working solution, oxidation of the hydrogenated working solution after removal of the catalyst, extraction of the oxidized working solution with water to obtain a hydrogen peroxide-water solution and possible washing thereof, which method is characterized in that the working solution which is to be hydrogenated, consists of ethylanthraquinone in an amount of 140-170 grams/litre, preferably about 160 grams/litre, amylanthraquinone in an amount of up to 100 grams/litre, preferably about 40 grams/litre and the rest trimethylbenzene (Shellsol) and tetrabutylurea (TBU), octylcaprolactam or substituted pyrrholidones in the weight ratio of 65:35 to 70:30, preferably 70:30. 15-18 grams hydrogenperoxide per litre working solution can then easily be produced.

According to the invention, it is suitable that the hydrogenating occurs at a temperature below, but near the flash point of the solution, i.e. below about 65°C and at a pressure of 1-5 Bar overpressure, preferably at an overpressure of 4 Bars.

According to the invention, the catalyst should be present in an amount of about 2-7 grams /liter, preferably 3-4 grams/litre, where the reaction solution is also stirred with a mechanical stirrer.

According to the invention, the catalyst in the outflowing hydrogenated working solution is separated from the solution by a filter- or a cyclone arrangement and returned to the hydrogenating reactor.

If the separation of the catalyst is carried out in a cyclone arrangement, it is suitable according to the invention that it occurs at a higher pressure at the outlet of the working solution from the cyclone than at the outlet of the catalyst sludge, wherein hydrogen gas does not accompany the working solution but instead accompanies the catalyst sludge back to the reactor. The separation of the catalyst will then be improved appreciably since the floating effect will be avoided. At the same time the use of the hydrogen gas will be improved.

According to the invention, it is suitable that the working solution, after possible degassing of hydrogen, is oxidized at a temperature of below 65°C, preferably at about 55°C in an oxidation tower in countercurrent to air or oxygen which is introduced at the lower part of the tower.

The oxidized working solution can suitably be extracted in an extraction tower having hole trays at a temperature of below 40°C, preferably 30-35°C in countercurrent to water to obtain a hydrogen peroxide-water solution having a concentration of 35-40°C.

According to the invention it is advantageous that the extracted hydrogen peroxide water solution is filtered in a coalescerfilter before it is washed in countercurrent by means of a solvent which is insoluble or hardly soluble in the hydrogen peroxide-water solution for the working solution such as trimethylbenzene (Shellsol).

The invention also comprises an arrangement for performing the method according to the invention which includes hydrogenating reactor, oxidation tower, extraction tower, separation arrangement for separating the catalyst from hydrogenated working solution between the hydrogenating reactor and the oxidation tower and possibly a washing column after the extraction tower, which arrangement is characterized in that the filtering arrangement between the hydrogenating reactor and the oxidation tower includes a primary filter in the form of one or more hydrocyclones.

If several hydrocyclones are used, it is suitable, according to the invention, that there are parallel coupled in a common housing.

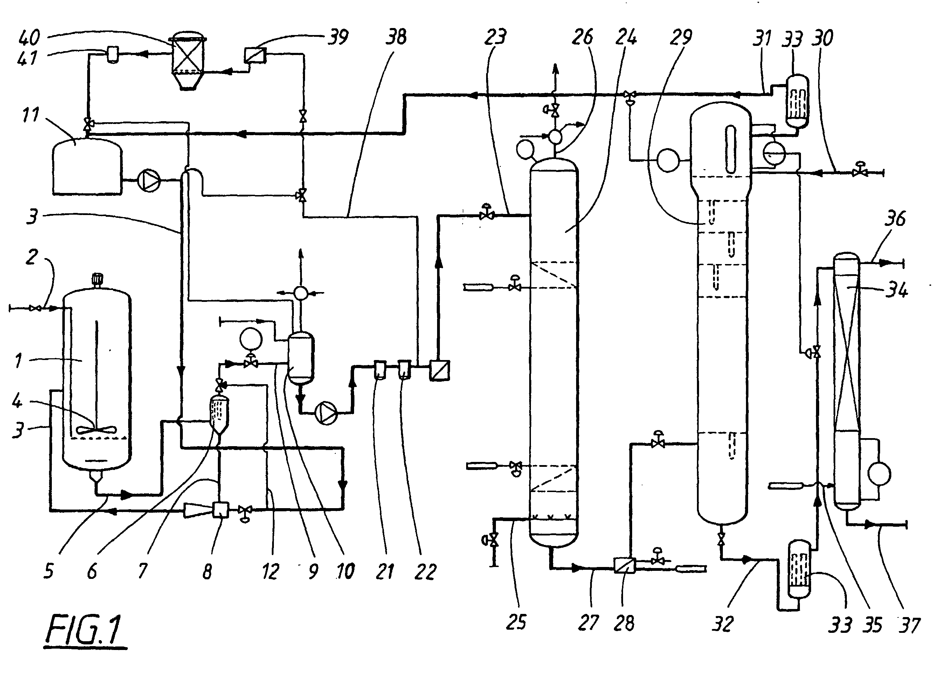

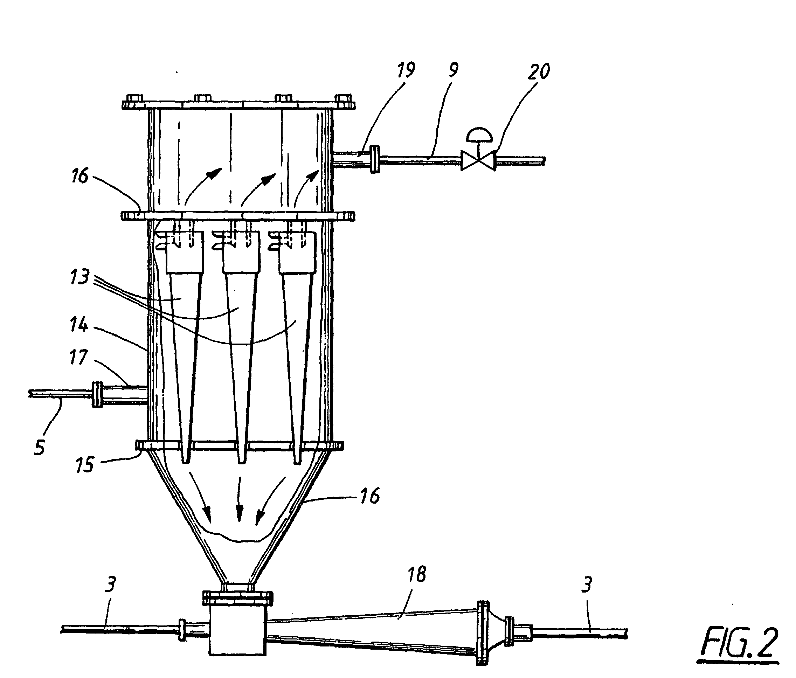

The invention will be described below in more detail with reference to Fig. 1, which shows a flow sheet for the method according to the invention and where Fig. 2 shows the arrangement of the hydrocyclones in a container.

### DETAILED DESCRIPTION:

To the left in Fig. 1 first a hydrogenating reactor 1 is shown which is fed with hydrogen gas 2 and working solution 3. The hydrogen gas is fed into the reactor 1 at its lower part and is allowed to flow upwards through the working solution causing a stirring thereof by the upwardly flowing hydrogen gas bubbles. For better stirring and mass transport, however, also a stirrer 4 is arranged. Due to the low content of catalyst, namely 2-7 grams/litre, usually about 3 grams/litre, such a stirring can occur without grinding down the catalyst. The low content of the catalyst can be maintained in that the solvent solution, which has the special composition according to the invention, can be subjected to a temperature of slightly below the flash point of the solution, i.e. slightly below 65°C where an overpressure of 1-5 bar, usually about 4 bar, is required. It is also possible to use higher pressures and higher temperatures but at the higher temperatures the risk of fire is increased in the case of a liquid leakage. In earlier known methods, a temperature of about 40°C is used since in the known working solutions too many by-products were obtained above this temperature area. At this low temperature and with insufficient stirring the desired reactions also went slower and it was therefore necessary to use a catalyst amount of 10-20 grams/litre. Such a high catalyst amount prevents mechanical stirring since the catalyst would be ground down by friction of the different granules against each other and the result would be plugging of the succeeding filters due to these small particles.

The catalyst which is used is usually zeolite granules (AlSi) coated with the precious metal, palladium. Also other known catalysts in the form of granules or powder may be used.

The working solution, which is added continuously through the supply pipe 3, consists of ethylanthraquinone in an amount of 140-170 grams/litre, preferably about 160 grams/litre and amylanthraquinone in an amount of up to 100 grams/litre, preferably about 40 grams/litre, whereas the rest of the working solution consists of trimethylbenzene (Shellsol) and tetrabutylurea (TBU), octylcaprolactam or substituted pyrrholidones in the weight ratio of 65:35 to 70:30, preferably 70:30. Due to this working solution a higher hydrogenation degree is made possible. By the addition of up to 100 grams/litre amylanthraquinone the hydrogenation degree can be increased from the usual level of 10-12 grams hydrogen peroxide per litre up to 18 grams/litre. Such a high hydrogenation degree has earlier only been obtainable by means of an appreciably greater addition of the easily soluble but expensive amylanthraquinone. The new effective composition of the working solution is brought about by combining use of TBU, octylcaprolactam or substituted pyrrholidones with amylanthraquinone.

By adjusting the ratio between, for example, TBU and Shellsol from 70:30 to 65:35, the division factor for hydrogen peroxide between water phase and working solution phase is kept low, so that explosive emulsions cannot arise even at the highest hydrogenation degree. Moreover, the high flash point gives higher security and lower the risk of fire. A low vapour pressure also decreases the emission to the atmosphere and simplifies the cleaning of the off-gases. The working solution according to the present invention can also be hydrogenated in a reactor having a solid bed.

From the hydrogenating reactor 1 hydrogenated working solution is taken out, suitably at the bottom part through the conduit 5 and it is fed to a primary filter 6. In this primary filter 6 the catalyst is separated which is brought in the form of a sludge through the conduit 7 to an ejector 8 which is coupled to the supply conduit 3 for the supply of working solution to the hydrogenation reactor 1. From the primary filter 6 the working solution, which as far as possible is separated from the catalyst, is fed through the conduit 9 to a degassing tank 10.

The amount of catalyst-free working solution which is fed through the conduit 9 to the degasser 10 has a smaller volume than the working solution which was added to the separation device 6 since the catalyst sludge has been removed through the conduit 7. The relation between these amounts may be 100:20. New working solution is fed from a storage tank 11 for such solution to the hydrogenation reactor 1. The fresh working solution is fed through the conduit 3 via the ejector 8 to the hydrogenation tank 1. In the flow direction of the working solution before the ejector, means are provided for cooling or heating the working solution so that it reaches a temperature of about 30-35°C before it is fed into the hydrogenation reactor 1. By means of the hydrogenation reaction, a heating to the desired temperature occurs. The hydrogenation reactor 1 can also be provided with cooling arrangements to make certain that a too high temperature does not arise.

The primary filter 6 can either consist of a conventional filter of sintered steel or, as is preferred according to the invention, of a hydrocyclone filter. The disadvantage with the conventional filters is that they are plugged after a certain time and they must therefore be cleaned by letting liquid flow in the opposite direction to the working direction. A conduit 12 for such a rinsing of the filter is connected between the supply pipe 3 and the outlet pipe 9 from the primary filter. A number of such primary filters must be present so that they can be rinsed alternately. They must also often be dismantled and cleaned outside the process or exchanged. Production disturbancies arise easily. About 1/3 of the whole catalyst mass is located in these filters, which of course does'not mean an effective use of the catalyst.

According to the invention, however, a hydrocyclone arrangement is preferred as a separation arrangement 6. Such hydrocyclone filters are already known per se. They consist of an elongated conical container with a narrow opening in the bottom and a larger opening in the centre at the upper, wider part of the cone. Liquid which is to be filtered in such a hydrocyclone will flow in tangentially with a high velocity at the upper part of the cone creating a vortex which throws the solid particles against the walls of the cone where they may through the action of gravity slide downwardly along the wall. This downwardly streaming sludge of liquid is allowed to flow out through the narrow opening at the bottom part of the cyclone. In the centre of the vortex, however, an ascending vortex is formed, which is almost totally freed from solid particles and which is allowed to flow out from an opening in the centre of the upper, wider part of the cone. Such hydrocyclones are usually approximately 1/2 meter long and have a diameter in the upper end of about 50 mm. The capacity is approximately 2 m³ working solution per hour and the separation degree is in the order of about 99.9% or higher.

Fig. 2 shows how the limited capacity of a hydrocyclone can be compensated by arranging a number of cyclones parallelly. This has been done by arranging the cyclones 13 in a container 14 having a bottom 15 and a cover part 16 and a supply opening 17. As appears from the figure the pointed ends of the cyclones 13 are protruding through the bottom 15 and the upper outlet parts of the cyclones 13 are coupled to the cover part 16 which has openings facing the central outflow openings in the cyclones. Working solution from the hydrogenating reactor 1 will flow into the container 14 and fill it so that the cyclones 13 are completely surrounded by working solution. It stands under pressure and the working solution will then flow in tangentially into the cyclones 13 at their upper parts. Separated catalyst sludge is collected in a funnel 16 and fed to the ejector 18. The catalyst-free working solution enters a space in the cover part 16 and is allowed to flow out therefrom through an opening 19. This opening 19, which is connected to the pipe 9, is provided with a throttling valve 20 so that the correct counterpressure is created in the cyclones. This is important since above a certain pressure no hydrogen is dissipated from the catalyst, but instead it can entirely go along with it and be reused in the hydrogenation reactor.

Since the hydrogen does not go along with the working solution, no degassing equipment is needed when hydrocyclones are used. The hydrogen gas is used very effectively since it is returned to the reactor. The hydrocyclones separate the catalyst very completely and subsequent filter arrangements can be spared. The hydrocyclones are reliable and need little maintenance. Moreover, no catalyst will be present to any appreciable degree in the filter house which means that the catalyst is used more efficiently.

After the first separation, further filters are suitably used, namely secondary filters 21 and a polishing filter 22, such as are shown in Fig. 1.

After filtering of the catalyst and possible degassing of the working solution, the latter is fed in via the conduit 23 into an oxidation tower 24 where the solution is oxidized forming hydrogen peroxide (H₂O₂) and quinone compounds. The oxidation can suitably occur by means of air or oxygen gas which is supplied to the tower 24 via the supply conduit 25 at its lower part. Such oxidation towers are known per se and are not described in more detail here. The oxidation, however, occurs in counter-current and at a temperature of below 65°C preferably at about 55°C. Exhaust gases, such as primarily the nitrogen of the air, are taken out at the top of the tower through the conduit 26 and are let out into the atmosphere after cooling and cleaning. When pure oxygen gas is used, no further exhaust gas cleaning arrangement is needed.

The oxidized working solution together with hydrogen peroxide is taken out at the bottom part of the tower through the conduit 27 and is cooled down to a temperature of below 40°C, preferably 30-35°C, in a cooling arrangement 28 before it is fed in at the lower part of an extraction tower 29 with hole trays of known kind. The solution can then flow upwardly and meet a water stream of pure water which is fed in at the upper part of the extraction tower through the conduit 30. The peroxide free working solution is taken out via the conduit 31 at the upper part of the extraction tower 29 and is fed back to the storage tank 11 for working solution after filtering in a coalescer 33. Small remainders of free water can be present in the working solution after the coalescer filter, but these remainders are solved in the working solution at the entrance to the hydrogenating reactor since the temperature there is appreciably higher. In other processes where the temperature in the extraction process is kept higher it is necessary to have a special drying step before the hydrogenation since even small amounts of free water will give rise to considerable disturbancies in hydrogenation reaction and in the succeeding filtering. This drying step is not needed in this process.

The hydrogen peroxide-water solution which consists of 35-40 percentage by weight hydrogen peroxide is taken out at the lower part of the extraction tower through the conduit 32 and is allowed to flow through a coalescer filter 33 before it is fed into a cleaning tower 34, which principally is of the same construction as the extraction tower 29 and where the hydrogen peroxide solution will meet an ascending flow of solvent which is fed in at the lower part through the conduit 35. This solvent, which is almost totally insoluble in the hydrogen peroxide-water solution dissolves any remainders of the working solution and is taken out through the conduit 36 at the top of the tower. The cleaned hydrogen peroxide solution is taken out at the lower part of the cleaning tower 34 through the conduit 37 and goes back to a storage tank after possible through-flowing of a coalescer filter and/or a distillation apparatus for concentrating the hydrogen peroxide content.

About 10% of the filtered working solution after the filtering in the hydrocyclone plant or the conventional filter plant is taken out from the main stream conduit in a conduit 38 which leads to a regeneration plant for the working solution. The working solution from the conduit 38 is first heated in a heater 39 which is driven by steam. From the heater the working solution goes to a regenerator 40 into which the solution is fed from the bottom and is allowed to flow upwardly through granules of gamma-aluminium oxide, so-called activated aluminium oxide with hydroxyl groups on the surface, whereupon the working solution is fed out from the top of the regenerator 40. The impurities which it is most desirable to remove in the regenerator are epoxides or other by-products. It is also possible to regenerate working solution after the oxidation instead of hydrogenated working solution. In this case, a stream is taken from the storage tank 11 for working solution. After the regenerator the working solution is filtered in a filter 41 and is thereafter fed back to the storage tank 10 or 11.

Through this way of regenerating using only aluminium oxide, the earlier usual way of using a soda solution is avoided. The alkaline solution, which also is liquid, must be removed from the working solution, which is difficult to perform completely.

Thus, through the present invention, a method for the production of hydrogen peroxide and an arrangement which gives an end product of high purity and with a high concentration while using a simplified production plant with low investment costs and with a minimal emission of exhaust gases to the atmosphere or other emissions has been obtained.

The invention is not limited to the above described embodiment examples but can be varied in different ways within the scope of the patent claims.

## Claims

1. Method for the production of hydrogen peroxide (H₂O₂) by hydrogenating a quinone solution (working solution) with hydrogen gas using a catalyst in dispersion in the working solution, oxidation of the hydrogenated working solution after removal of the catalyst, extraction of the oxidized working solution with water to obtain a hydrogen peroxide-water solution and possibly washing this,
**characterized in that** the working solution which is to be hydrogenated consists of ethylanthraquinone in an amount of 140-170 grams/litre, preferably about 160 grams/litre, amylanthraquinone in an amount of up to 100 grams/litre, preferably about 40 grams/litre and the rest trimethylbenzene (Shellsol) and tetrabutylurea (TBU), octylcaprolactam or substituted pyrrolidones in a weight ratio of 65:35 to 70:30, preferably 70:30.

2. Method according to claim 1,
**characterized in that** the hydrogenation occurs at a temperature below but near the flash point of the solution, i.e. below about 65°C and at a pressure of 1-5 Bar overpressure, preferably at about 4 Bar overpressure.

3. Method according to claim 1 or 2,
**characterized in that** the catalyst is present in an amount of about 2-7 grams/litre, preferably 4 grams/litre and that the reaction solution is stirred with a mechanical stirrer.

4. Method according to any of claims 1-3,
**characterized in that** the catalyst in the outstreaming hydrogenated working solution is separated from the solution by means of a filter or cyclone arrangement and returned to the hydrogenating reactor.

5. Method according to claim 4,
**characterized in that** when the separation of the catalyst takes place in a cyclone arrangement this occurs at a higher pressure at the outlet of the working solution than at the outlet of the catalyst sludge, where hydrogen gas does not accompany the working solution but instead is returned to the reactor together with the catalyst sludge.

6. Method according to any of claims 1-5,
**characterized in that** the working solution after possible degassing of hydrogen is oxidized at a temperature of below 65°C, preferably at about 55°C in an oxidation tower in counter-current to air or oxygen which is fed in at the lower part of the tower.

7. Method according to any of claims 1-6,
**characterized in that** the oxidized working solution is extracted in an extraction tower having hole trays at a temperature of below 40°C, preferably at 30-35°C in counter-current to water to obtain a hydrogen peroxide-water solution with a concentration of 35-40%.

8. Method to any of claims 1-7,
**characterized in that** the extracted hydrogen peroxide-water solution is filtered in a coalescer filter before it is washed in counter-current by means of a solvent, such as trimethylbenzene (Shellsol), for the working solution, which solvent is insoluble or difficult to dissolve in the hydrogen peroxide-water solution.

9. Arrangement for performing the method according to any of claims 1-8 comprising a hydrogenating reactor (1), oxidation tower (24), extraction tower (29), separation arrangement (6) for separating the catalyst from hydrogenated working solution between the hydrogenating reactor (1) and the oxidation tower (24) and possible washing tower (34) after the extraction tower (29),
**characterized in that** the filtering arrangement (6) between the hydrogenating reactor (1) and the oxidation tower (24) comprises a primary filter in the form of one or more hydrocyclones (13).

10. Arrangement according to claim 9,
**characterized in that** several hydrocyclones (13) are parallelly coupled in a common housing (14).

## Patentansprüche

1. Verfahren zur Herstellung von Wasserstoffperoxid (H₂O₂) durch Hydrierung einer Chinon-Lösung (Arbeitslösung) mit Wasserstoffgas unter Verwendung eines Katalysators in Dispersion in der Arbeitslösung, Oxidation der hydrierten Arbeitslösung nach Entfernen des Katalysators, Extraktion der oxidierten Arbeitslösung mit Wasser unter Erhalt einer Wasserstoffperoxid-Wasser-Lösung und möglicherweise Waschen dieser, **dadurch gekennzeichnet, daß** die Arbeitslösung, die hydriert werden soll, aus Ethylanthrachinon in einer Menge von 140 bis 170 Gramm/Liter, vorzugsweise etwa 160 Gramm/Liter, Amylanthrachinon in einer Menge von bis zu 100 Gramm/Liter, vorzugsweise etwa 40 Gramm/Liter und als Rest Trimethylbenzol (Shellsol) und Tetrabutylharnstöff (TBU), Octylcaprolactam oder substituierte Pyrrolidone in einem Gewichtsverhältnis 65:35 bis 70:30, vorzugsweise 70:30 besteht.

2. Verfahren nach Anspruch 1, **dadurch gekennzeichnet, daß** die Hydrierung bei einer Temperatur unter dem, aber nahe beim Flammpunkt der Lösung, d.h. unter etwa 65°C, und bei einem Druck von 1 bis 5 bar Überdruck, vorzugsweise bei etwa 4 bar Überdruck erfolgt.

3. Verfahren nach Anspruch 1 oder Anspruch 2, **dadurch gekennzeichnet, daß** der Katalysator in einer Menge von etwa 2 bis 7 Gramm/Liter, vorzugsweise 4 Gramm/Liter vorliegt und daß die Reaktionslösung mit einem mechanischen Rührer gerührt wird.

4. Verfahren nach einem der Ansprüche 1 bis 3, **dadurch gekennzeichnet, daß** der Katalysator in der ausströmenden hydrierten Arbeitslösung mit Hilfe eines Filters oder einer Zyklonvorrichtung aus der Lösung abgetrennt und zum Hydrierungsreaktor zurückgeführt wird.

5. Verfahren nach Anspruch 4, **dadurch gekennzeichnet, daß**, wenn die Abtrennung des Katalysators in einer Zyklonvorrichtung erfolgt, dies bei einem höheren Druck am Auslaß des Katalysatorschlamms geschieht, wobei kein Wasserstoffgas von der Arbeitslösung mitgeführt wird, sondern statt dessen zusammen mit dem Katalysatorschlamm zu dem Reaktor zurückgeführt wird.

6. Verfahren nach einem der Ansprüche 1 bis 5, **dadurch gekennzeichnet, daß** die Arbeitslösung nach einem möglichen Entgasen unter Entfernung von Wasserstoff bei einer Temperatur unter 65°C, vorzugsweise bei etwa 55°C, in einem Oxidationsturm im Gegenstrom zu Luft oder Sauerstoff, die (der) am unteren Teil des Turms zugeführt wird, oxidiert wird.

7. Verfahren nach einem der Ansprüche 1 bis 6, **dadurch gekennzeichnet, daß** die oxidierte Arbeitslösung in einem Extraktionsturm, der Siebböden hat, bei einer Temperatur unter 40°C, vorzugsweise bei 30 bis 35°C im Gegenstrom zu Wasser extrahiert wird, wobei eine Wasserstoffperoxid-Wasser-Lösung mit einer Konzentration von 35 bis 40 % erhalten wird.

8. Verfahren nach einem der Ansprüche 1 bis 7, **dadurch gekennzeichnet, daß** die extrahierte Wasserstoffperoxid-Wasser-Lösung in einem Koaleszenzfilter filtriert wird, bevor sie im Gegenstrom mit einem Lösungsmittel, z.B. Trimethylbenzol (Shellsol), für die Arbeitslösung gewaschen wird, wobei das Lösungsmittel in der Wasserstoffperoxid-Wasser-Lösung unlöslich ist oder schwer löslich ist.

9. Anordnung zur Durchführung des Verfahrens nach einem der Ansprüche 1 bis 8, die einen Hydrierungsreaktor (1), einen Oxidationsturm (24), einen Extraktionsturm (29), eine Separationsvorrichtung (6) zum Abtrennen des Katalysators aus der hydrierten Arbeitslösung zwischen dem Hydrierungsreaktor (1) und dem Oxidationsturm (24) und einem möglichen Waschturm (34) nach dem Extraktionsturm (29) umfaßt, **dadurch gekennzeichnet, daß** die Filtriervorrichtung (6) zwischen dem Hydrierungsreaktor (1) und dem Oxidationsturm (24) ein Primärfilter in Form eines Hydrozyklons oder mehrerer Hydrozyklone (13) umfaßt.

10. Anordnung nach Anspruch 9, **dadurch gekennzeichnet, daß** mehrere Hydrozyklone (13) in einem üblichen Gehäuse (14) parallel geschaltet sind.

## Revendications

1. Procédé de production de peroxyde d'hydrogène (H₂O₂) par hydrogénation d'une solution de quinone (solution de travail) avec de l'hydrogène gazeux en présence d'un catalyseur dispersé dans la solution de travail, oxydation de la solution de travail hydrogénée après élimination du catalyseur, extraction de la solution de travail oxydée avec de l'eau afin d'obtenir une solution aqueuse de peroxyde d'hydrogène, et éventuellement lavage de celle-ci, **caractérisé par le fait que** la solution de travail à hydrogéner est constituée de 140 - 170 g/l, de préférence d'environ 160 g/l, d'éthylanthraquinone, de jusqu'à 100 g/l, de préférence jusqu'à 40 g/l d'amylanthraquinone, la partie complémentaire étant formée par du triméthylbenzène (Shellsol) et de la tétrabutylurée (TBU), d'octylcaptolactame ou de pyrrolidones substituées en un rapport pondéral allant de 65:35 à 70:30, de préférence égal à 70:30.

2. Procédé selon la revendication 1, **caractérisé par le fait que** l'hydrogénation est réalisée à une température inférieure à mais proche du point éclair de la solution, c'est-à-dire inférieure à environ 65 °C, et à une surpression de 1 à 5 bars, de préférence d'environ 4 bars.

3. Procédé selon la revendication 1 ou 2, **caractérisé par le fait que** le catalyseur est présent en une quantité d'environ 2 à 7 g/l, de préférence égale à 4 g/l et que la solution réactionnelle est agitée au moyen d'un agitateur mécanique.

4. Procédé selon l'une quelconque des revendications 1 à 3, **caractérisé par le fait que** le catalyseur dans la solution de travail hydrogénée sortante est séparé de la solution au moyen d'un filtre ou d'un cyclone et est renvoyé dans le réacteur d'hydrogénation.

5. Procédé selon la revendication 4, **caractérisé par le fait que**, lorsque la séparation du catalyseur a lieu dans un cyclone, cela se fait avec une pression au niveau de la sortie de la solution de travail qui est supérieure à la pression au niveau de la sortie de la boue de catalyseur, l'hydrogène gazeux n'accompagnant pas la solution de travail mais étant renvoyé dans le réacteur avec la boue de catalyseur.

6. Procédé selon l'une quelconque des revendications 1 à 5, **caractérisé par le fait que** la solution de travail, après une éventuelle élimination d'hydrogène par dégazage, est oxydée à une température inférieure à 65 °C, de préférence d'environ 55 °C, dans une tour d'oxydation avec un contre-courant d'air ou d'oxygène introduit au niveau de la partie inférieure de la tour.

7. Procédé selon l'une quelconque des revendications 1 à 6, **caractérisé par le fait que** la solution de travail oxydée est extraite dans une tour d'extraction avec des plateaux à trous à une température inférieure à 40 °C, de préférence comprise entre 30 et 35 °C, avec un contre-courant d'eau, ce qui donne une solution aqueuse de peroxyde d'hydrogène ayant une concentration comprise entre 35 et 40 %.

8. Procédé selon l'une quelconque des revendications 1 à 7, **caractérisé par le fait que** la solution aqueuse de peroxyde d'hydrogène extraite est filtrée dans un filtre-coalesceur, avant d'être lavée en contre-courant avec un solvant de la solution de travail, tel que le triméthylbenzène (Shellsol), lequel solvant est insoluble ou difficilement soluble dans la solution aqueuse de peroxyde d'hydrogène.

9. Installation pour mettre en oeuvre le procédé selon l'une quelconque des revendications 1 à 8, comprenant un réacteur d'hydrogénation (1), une tour d'oxydation (24), une tour d'extraction (29), un dispositif de séparation (6) pour séparer le catalyseur de la solution de travail hydrogénée, disposé entre le réacteur d'hydrogénation (1) et la tour d'oxydation (24), et éventuellement une tour de lavage (34) en aval de la tour d'extraction (39), **caractérisé par le fait que** le dispositif de filtration (6) situé entre le réacteur d'hydrogénation (1) et la tour d'oxydation (24) comprend un filtre primaire sous la forme d'un ou de plusieurs hydrocyclones (13).

10. Installation selon la revendication 9, **caractérisée par le fait que** plusieurs hydrocyclones (13) sont couplés en parallèle dans un boîtier commun (14).
